Europäisches Patentamt

European Patent Office

Office européen des brevets

(19)

(11) Veröffentlichungsnummer: **0 005 482**
**B1**

(12) # EUROPÄISCHE PATENTSCHRIFT

(45) Veröffentlichungstag der Patentschrift: 30.06.82

(21) Anmeldenummer: 79101359.2

(22) Anmeldetag: 04.05.79

(51) Int. Cl.³: **C 04 B 35/10,**
**C 04 B 35/42, C 04 B 35/66**

(54) Feuerfeste Trockenstampfmasse zum Auskleiden von Induktionstiegelöfen.

(30) Priorität: 12.05.78 AT 3470/78

(43) Veröffentlichungstag der Anmeldung:
28.11.79 Patentblatt 79/24

(45) Bekanntmachung des Hinweises auf die Patenterteilung:
30.06.82 Patentblatt 82/26

(84) Benannte Vertragsstaaten:
BE DE FR GB IT SE

(56) Entgegenhaltungen:
DE - A - 1 908 116
DE - A - 2 609 251
US - A - 3 615 775
US - A - 3 862 845

CHEMICAL ABSTRACTS, Vol. 81, Nr. 26, 30.
Dezember 1974, Nr. 175166h
Columbus, Ohio, U.S.A.
S.A SUVOROV et al.: "Charge for refractory
products", Seite 364

(73) Patentinhaber: Veitscher Magnesitwerke- Actien-
Gesellschaft
Schubertring 10-12
A-1010 Wien (AT)

(72) Erfinder: Geyer, Karl, Ing.
Magnesitstrasse 6
A-8707 Leoben (AT)

(74) Vertreter: Kliment, Peter, Dipl.-Ing.Mag.-iur.
Singerstrasse 8
A-1010 Wien (AT)

(56) Entgegenhaltungen:
CHEMICAL ABSTRACTS, Vol. 81, Nr. 14, 7.
Oktober 1974, Nr. 81715j
Columbus, Ohio, U.S.A.
K.N. REPENKO et al.: "Refractory mass", Seite
258

Anmerkung: Innerhalb von neun Monaten nach der Bekanntmachung des Hinweises auf die Erteilung des europäischen
Patents im Europäischen Patentblatt kann jedermann beim Europäischen Patentamt gegen das erteilte europäische
Patent Einspruch einlegen. Der Einspruch ist schriftlich einzureichen und zu begründen. Er gilt erst als eingelegt,
wenn die Einspruchsgebühr entrichtet worden ist (Art. 99(1) Europäisches Patentübereinkommen).

EP 0 005 482 B1

## Feuerfeste Trockenstampfmasse zum Auskleiden von Induktionstiegelöfen

Die Erfindung betrifft eine feuerfeste Trockenstampfmasse zum Auskleiden von Induktionstiegelöfen.

Bei Induktionstiegelöfen besteht das Problem, die feuerfeste Auskleidung so auszubilden, daß während des Betriebs ein Durchbruch von Stahl durch die Auskleidung hintangehalten wird, weil solche Durchbrüche zur Zerstörung der Induktionsspule durch den eingedrungenen Stahl führen. Zur Lösung dieses Problems strebt man eine gestampfte Auskleidung an, in der es während des Betriebs zur Ausbildung von folgenden drei Zonen kommt:

An der Innenseite des Tiegels, also an der mit dem Stahlbad in Berührung stehenden Seite, soll sich eine feste, gesinterte Zone ausbilden, die den Angriffen von Metallbad und Schlacke gut widersteht, wenn auch eine gewisse Rißanfälligkeit nicht auszuschließen ist.

In der dahinter liegenden Zone soll sich eine stahldichte Sperr- oder Pufferschicht ausbilden, in der die Masseteilchen relativ dicht aneinandergelagert sind, die jedoch noch ein körniges, nicht durchgesintertes Gefüge aufweist, wodurch allenfalls durch Risse der gesinterten Schicht eindringender Stahl abgefangen werden kann und auch die bei Temperaturwechseln auftretenden Spannungen der gesinterten Schicht aufgenommen werden können. Erreicht wird dies, wenn die Masse bei den in dieser Zone herrschenden erhöhten Temperaturen ein starkes Wachstum zeigt, hervorgerufen durch Wärmedehnungen und insbesondere durch chemische Reaktionen zwischen den Komponenten, aus denen die Masse zusammengesetzt ist. Da die Ofenauskleidung in der Regel zylindrisch ist, wird durch ein starkes Wachsen der Pufferschicht die gesinterte Innenschicht unter Druck gesetzt, wodurch dort entstehende Risse geschlossen werden können.

An die Sperr- oder Pufferzone soll sich eine Schicht anschliessen, in der sich die Masse im ursprünglichen, von der Stampfung herrührenden Zustand befindet und die als Vorratszone dient. Wenn im Laufe der Ofenreise die Tiegelauskleidung von innen her verschleißt, wandern die gesinterte Schicht und die dichte, aber körnige Sperrschicht nach außen, wobei sich die zunächst unveränderte Vorratszone nach und nach unter Wachsen zur Sperrschicht ausbildet. Auf diese Weise sollen während der ganzen Ofenreise Stahldurchbrüche vermieden werden.

Diese Forderungen werden von den folgenden bekannten Trockenstampfmassen nur mehr oder minder zufriedenstellend erfüllt:

Magnesitische Massen aus hochwertiger eisenarmer Sintermagnesia schwinden auch bei höchsten Temperaturen nur wenig, weisen eine hohe Schlackenbeständigkeit auf, neigen jedoch bei stärkerer Abkühlung zur Rissebildung. Da infolge des Fehlens anderer Komponenten keine chemischen Reaktionen zur Förderung des Wachstums stattfinden, versucht man, die Stahldichtheit durch einen besonderen Kornaufbau zu erreichen (AT—B 223 112).

Massen, bestehend aus Gemischen von Sintermagnesia und Chromerz, bilden bei höheren Temperaturen Magnesiachromspinelle $MgCr_2O_4$ und weisen demzufolge ein geringes Wachstum auf, das die Rißanfälligkeit vermindert.

Massen aus hochgebrannter Sintermagnesia mit einem Zusatz von Chrom-III-oxid bilden ebenfalls den hochfeuerfesten Spinell $MgCr_2O_4$ unter einer gewissen Volumzunahme, sofern das Kalk-Kieselsäure-Gewichtsverhältnis der Masse unter 2 liegt (AT—B 315 718).

Massen aus vorzugsweise eisenarmer Sintermagnesia mit einem Zusatz von feinverteiltem Zirkoniumoxid oder einer $ZrO_2$ liefernden silicatfreien Verbindung und einem bestimmten Mindestgehalt an CaO bilden unter Volumvermehrung das hochfeuerfeste Calciumzirkonat $CaZrO_3$ (DE—B 2 552 150).

Massen aus Magnesia im Überschuß mit Zusatz eines $Al_2O_3$-Materials, wie Schmelzkorund oder Sintertonerde, bilden den Spinell $MgAl_2O_4$ unter relativ starker Volumzahme in der Sperrzone (AT—B 223 112).

Massen aus $Al_2O_3$-Material im Überschuß und Magnesia bilden ebenfalls den Spinell $MgAl_2O_4$. Massen der letztgenannten Art haben sich in den letzten Jahren als die betriebssichersten Trockenstampfmassen erwiesen, weil der Hauptbestandteil dieser Massen, nämlich $Al_2O_3$, infolge geringerer thermischer Dehnung, als sie etwa Magnesia aufweist, eine bedeutend höhere Temperaturwechselbeständigkeit aufweist und diese Massen daher kaum rißanfällig sind. Dazu kommt die Bildung des Spinells $MgAl_2O_4$, wodurch einerseits zufolge des Wachstums in der Sperrzone die Stahldichtheit der Tiegelauskleidung gegeben ist, und andererseits ein heterogenes Gefüge geschaffen wird, welches sich günstig auf die Temperaturwechselbeständigkeit auswirkt, Jedoch befriedigen auch diese Massen noch nicht vollständig.

Aufgabe der Erfindung ist es, induktionsofen-Trockenstampfmassen, die zur Hauptsache aus einem $Al_2O_3$-Material bestehen, weiter zu verbessern. Nach der Erfindung gelingt dies durch den Zusatz eines vorreagierten Magnesiachromerz-Sintermaterials.

Aus der DE—A 2 609 251 ist eine Masse mit einem Zusatz eines Chrom-Magnesiumoxid-Klinkers bekannt, bei der jedoch die Grundkomponente ein $Al_2O_3$—$SiO_2$-Material, z.B. gebrannter Bauxit, ist. Eine solche Masse ist für die Trockenauskleidung von Induktionstiegelöfen nicht geeignet, weil mit derartigen Grundmaterialien die angestrebte Spinellbildung und Ausbildung einer ungesinterten, stahldichten Sperrzone nicht zu erreichen ist. Auch verhindern die vorhandenen $SiO_2$- und $Fe_2O_3$-Gehalte zufolge ihrer sinterfördernden Wirkung den Aufbau einer solchen ungesinterten Zone. Außerdem sind diese bekannten Massen mit Bindemitteln versehen und werden mit Wasserzusatz verarbeitet. Die Anwendung als bindemittelfreie Trockenstampfmassen ist nicht vorgesehen.

Aus der US—A 3 862 845 ist eine z.B. als Auskleidung für kernlose Induktionsöfen vorgesehene Masse aus Tabulartonerde mit einem Zusatz an Chromoxid bekannt, die mit einem Bindemittelzusatz in· Form einer wässerigen Magnesiumphosphatlösung versehen ist. Der geringe MgO-Gehalt dieser Masse stammt also nicht aus einer feuerfesten Komponente, sondern vom Bindemittel. Induktionsofenauskleidungen aus solchen mit wässerigen Bindemittellösungen verarbeiteten Massen erfordern vor Inbetriebnahme eine sorgfältige und daher langwierige Trocknung.

Aus der SU—A 395 343 (Chemical Abstracts, Vol. 81, 1974, Nr 81715j) ist eine feuerfeste Masse aus 90—98% Elektroschmelzkorund und 2—10% synthetischem Magnesiachromit insbesondere zur Auskleidung von Induktionsrinnenöfen bekannt. Im Gegensatz zu Induktionstiegelöfen werden Induktionsrinnenöfen üblicherweise mit wasserhältigen Massen ausgekleidet. So wird auch die bekannte Masse mit einem Wassergehalt verarbeitet, der je nach Anwendungsfall von 2,5—3 bis 5,5—6% schwankt. Ferner weist die Masse einen· Zusatz von z.B. 3% $TiO_2$ auf, welches ein sinterförderndes Mittel ist, dans eine rasche Durchsinterung der Masse bewirkt und die Ausbildung einer ungesinterten, stahldichten Sperrzone verhindert.

Die Erfindung betrifft somit eine feuerfeste Trockenstampfmasse zum Auskleiden von Induktionstiegelöfen auf Grundlage eines $Al_2O_3$-Materials in Form von Schmelzkorund oder Sintertonerde mit einem MgO-hältigen Zusatz, der mit dem $Al_2O_3$-Grundmaterial in der Hitze unter Spinellbildung reagiert.

Die Erfindung ist nun dadurch gekennzeichnet, daß die Masse als spinellbildenden Zusatz ein vorreagiertes Magnesiachromerz-Sintermaterial in einer Menge von 5 bis 50 Gew.-% enthält, eine Körnung von 0 bis 5 mm aufweist und einen Feinanteil in der Körnung von 0 bis 0,1 mm in einer Menge von 10 bis 35 Gew.-% enthält, wobei dieser Feinanteil aus dem $Al_2O_3$-Grundmaterial, aus vorreagiertem Magnesiachromerz-Sintermaterial oder aus einer Mischung dieser beiden Materialien besteht.

Besonders günstige Ergebnisse werden erzielt, wenn· das vorreagierte Magnesiachromerz-Sintermaterial in der Masse in der Körnung von 0 bis 1 mm vorliegt.

Da die erfindungsgemäße Masse auf $Al_2O_3$-Grundlage den Zusatz von vorreagiertem Magnesiachromerz-Sintermaterial aufweist, wird nicht nur $MgAl_1O_4$Spinell, sondern zusätzlich auch $MgCr_2O_4$-Spinell gebildet, wobei diese zusätzliche Spinellbildung von $MgCr_2O_4$ in einem höheren Temperaturbereich stattfindet als die Bildung des $MgAl_2O_4$-Spinells. Dadurch ist das durch die Spinellbildung hervorgerufene Wachstum in der Sperrzone über einen längeren Zeitraum wirksam.

Verglichen mit Massen auf $Al_2O_3$-Grundlage mit einem Magnesiazusatz tritt bei der erfindungsgemäßen Masse bei hohen Temperaturen über etwa 1400°C eine bedeutend stärkere Spinellbildung auf und ferner findet eine Spinellumwandlung statt, da nun nicht mehr $MgAl_2O_4$-Spinell vorliegt, sondern ein Mischspinell $(Mg, Fe^{II}) (Al, Cr, Fe^{III})_2O_4$. Dem entspricht auch ein starkes Wachstum der Masse, was als Vorteil gegenüber Massen Sintermagnesiazusatz anzusehen ist, da die Stahldichtheit der Tiegelauskleidung dadurch erhöht wird.

Dieser bei hohen Temperaturen über etwa 1400°C gebildete Mischspinell, bestehend hauptsächlich aus MgO, $Al_2O_3$ und $Cr_2O_3$, ist insbesondere gegen basische Schlacken weitaus beständiger als bloßer $MgAl_2O_4$-Spinell.

Das als Bestandteil der erfindungsgemäßen Masse vorgesehene vorreagierte Magnesiachromerz-Sintermaterial ist durch einen gemeinsamen Sinterbrand einer Mischung aus einer beim Brennen MgO liefernden Substanz (Magnesiaträger) und Chromerz zu erhalten, wobei man durch geeignete Wahl der Körnung der Ausgangskomponenten und der Brennbedingungen erreichen kann, daß das eingesetzte Chromerz während des Sinterbrands in hohem Ausmaß in der Magnesiagrundmass aufgelöst wird und nach dem Abkühlen des Sintermaterials in diesem als Spinellneubildung enthalten ist, so daß Restbestandteile der ursprünglichen Chromerzkörner (Chromitrelikte) fast nicht mehr vorhanden sind. Ein derartiges ausreagiertes Sintermaterial zeichnet sich durch hohe Volumsstabilität und Schlackenbeständigkeit aus.

Die Herstellung eines solchen Sintermaterials kann beispielsweise nach dem in der At—B 301 433 beschriebenen Verfahren durch Brikettieren und Brennen einer Ausgangsmischung aus einem Magnesiaträger, wie Rohmagnesit, kaustisch gebrannter Magnesia oder Sintermagnesia, und Chromerz erfolgen. Der Magnesiaträger wird dabei in feinteiliger Form unter 0,1 mm eingesetzt, während das Chromerz in grobkörniger Form in die Mischung eingebracht wird, wobei sein Anteil unter 0,1 mm höchstens 20 Gew.-% und sein Anteil über 1 mm mindestens 40 Gew.-% beträgt. Die brikettierte Mischung wird in einem Ofen unter Verwendung von Sauerstoff bei einer Temperatur von mindestens 2000°C, vorzugsweise mindestens 2100°C, jedoch ohne Niederschmelzen, über eine solche Brenndauer gebrannt, daß im erhaltenen Sintermaterial Chromitrelikte, wenn überhaupt, so nur bis zu einem Anteil von maximal 10 Vol.-% vorhanden sind. Der Sinterbrand erfolgt vorzugsweise im Schachtofen, kann aber auch in einem Drehofen durchgeführt werden, sofern in einem solchen die geforderten hohen Temperaturen erreicht werden. Die chemische Zusammensetzung und das Mischungsverhältnis der Ausgangskomponenten wird so eingestellt, daß·das Sintermaterial einen

3

$Cr_2O_3$-Gehalt von 10 bis 30 Gew.-%, einen MgO-Gehalt über 42 Gew.-%, einen $SiO_2$-Gehalt von höchstens 4 Gew.-% und einen CaO-Gehalt von höchstens 3 Gew.-% aufweist.

Für die erfindungsgemäße Masse ist auch ein Sintermaterial geeignet, das in der AT—B 336 478 beschrieben ist, dort allerdings, zur Herstellung gebrannter feuerfester Steine vorgesehen ist. Als Ausgangsmaterial dienen dabei ein Magnesiaträger in Form kaustischer oder gebrannter Magnesia mit einem Glühverlust von maximal 25 Gew.-%, gegebenenfalls Magnesitflugstaub, in der Korngröße unter i,1 mm und ein Chromerz in der Körnung von 0,1 bis 1,5 mm und mit einem FeO-Gehalt von 18 bis 27 Gew.-%, sowie vorzugsweise mit einem $Cr_2O_3$-Gehalt von 44 bis 52 Gew.-% und einem $SiO_2$-Gehalt von 0,3 bis 3 Gew.-%. Das Kalk-Kieselsäure-Gewichtsverhältnis in der Mischung wird auf mehr als 1,5 eingestellt. Die brikettierte Mischung dieser Ausgangsmaterialien wird in der vorhin beschriebenen Weise zu Sinter gebrannt. Das anfallende Sintermaterial weist einen $Cr_2O_3$-Gehalt von 15 bis 25 Gew.-% und einen $Fe_2O_3$ Gehalt von 11 bis 20 Gew.-% auf.

Auch andere Magnesiachromerz-Sintermaterialien kommen für die Zwecke der Erfindung in Betracht.

Der in der Masse in einer Menge von 10 bis 35 Gew.-% vorhandene Feinanteil in der Körnung von 0 bis 0,1 mm, der aus dem $Al_2O_3$-Grundmaterial, aus vorreagiertem Magnesiachromerz-Sintermaterial oder aus einer Mischung dieser beiden Materialien bestehen kann, trägt dazu bei, daß die gesinterte Innenschicht und die Sperrschicht ausreichend dicht werden.

Beispiele

In der folgenden Tabelle sind in den Rezepten 1 bis 10 Beispiele für erfindungsgemäße Massen angegeben, jedoch ist die Erfindung nicht auf diese Beispiele beschränkt. Als Schmelzkorund wird vorzugsweise Elektroschmelzkorund mit einem Gehalt von 99 Gew.-% $Al_2O_3$ eingesetzt. Die Rezepte A und B zeigen zum Vergleich herkömmliche Massen auf $Al_2O_3$-Basis mit Zusatz von Sintermagnesia.

| Rezept | | | 1 | 2 | 3 | 4 | 5 | 6 | 7 | 8 | 9 | 10 | A | B |
|---|---|---|---|---|---|---|---|---|---|---|---|---|---|---|
| | | | Gew.—% | | | | | | | | | | | |
| Schmelzkorund | 0 — 0,1 mm | | — | — | 15 | 15 | 15 | — | — | — | — | — | — | — |
| Schmelzkorund | 0,1 — 3 mm | | 85 | 70 | 70 | 70 | 55 | — | — | — | — | — | 85 | 70 |
| Sintertonerde | 0 — 0,1 mm | | — | — | — | — | — | — | — | 15 | 15 | 15 | — | — |
| Sintertonerde | 0,1 — 3 mm | | — | — | — | — | — | 85 | 70 | 70 | 70 | 55 | — | — |
| Magnesiachromsinter | 0 — 0,1 mm | | 15 | 30 | — | 15 | 10 | 15 | 30 | — | 15 | 10 | — | — |
| Magnesiachromsinter | 0,1 — 1 mm | | — | — | 15 | — | 20 | — | — | 15 | — | 20 | — | — |
| Sintermagnesia | 0 — 0,1 mm | | — | — | — | — | — | — | — | — | — | — | 15 | 30 |

Die Massen nach den Rezepten 1, 2, A und B wurden der Druckfließprüfung nach der Norm DIN 51053, Blatt 2 vom Januar 1973 unterworfen. Dabei wurden zylindrische Probekörper von 50 mm Durchmesser und 50 mm Höhe unter einer konstanten Belastung von 0,1 N/mm² über die Temperatur T bis auf 1500°C aufgeheizt und sodann während der Haltezeit t von 24 Stunden auf dieser Temperatur gehalten. Die dabei an den Probekörpern gemessenen Längenänderungen

$$\frac{\Delta l}{l}$$

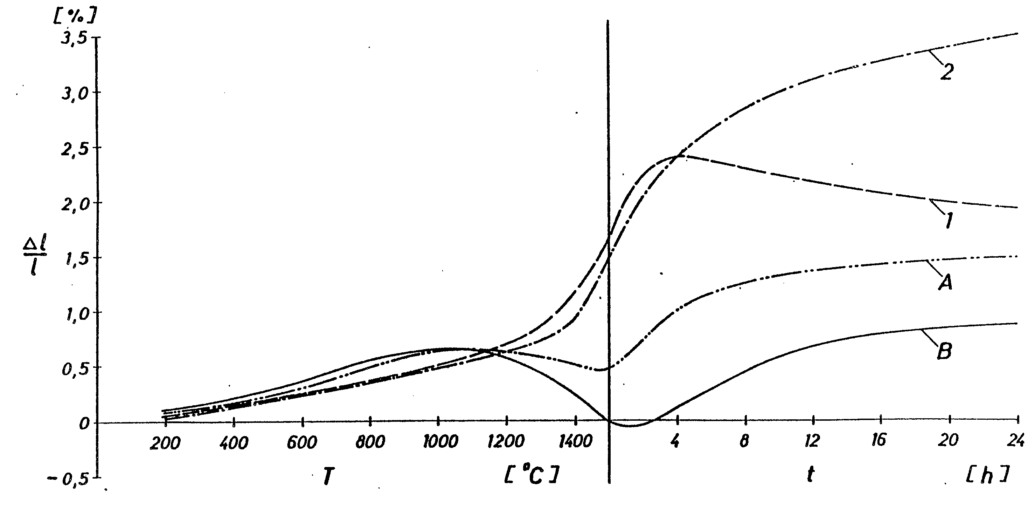

(in Linearprozent) sind in der Zeichnung schaubildlich dargestellt.

Es zeigt sich, daß die Massen auf $Al_2O_3$-Grundlage mit Magnesiazusatz (Rezepte A und B), welche nur $MgAl_2O_4$-Spinell bilden, gegen Ende der durch das Grundmaterial bedingten thermischen Dehnung (etwa bei 1300°C) vorerst leicht schwinden und erst später infolge der einsetzenden Spinellbildung weiter wachsen. Bei den erfindungsgemäßen Massen mit Zusatz von vorreagiertem Magnesiachromsinter (Rezepte 1 und 2) erfolgt dagegen eine kontinuierliches Wachstum, welches bei höheren Temperaturen auch noch ausgeprägter ist.

### Patentansprüche

1. Feuerfeste Trockenstampfmasse zum Auskleiden von Induktionstiegelöfen auf Grundlage eines $Al_2O_3$-Materials in Form von Schmelzkorund oder Sintertonerde mit einem MgO-hältigen Zusatz, der mit dem $Al_2O_3$-Grundmaterial in der Hitze unter Spinellbildung reagiert, dadurch gekennzeichnet, daß die Masse als spinellbildenden Zusatz ein vorreagiertes Magnesiachromerz-Sintermaterial in einer Menge von 5 bis 50 Gew.-% enthält, eine Körnung von 0 bis 5 mm aufweist und einen Feinanteil in der Körnung von 0 bis 0,1 mm in einer Menge von 10 bis 35 Gew.-% enthält, wobei dieser Feinanteil aus dem $Al_2O_3$-Grundmaterial, aus vorreagiertem Magnesiachromerz-Sintermaterial oder aus einer Mischung dieser beiden Materialien besteht.

2. Masse nach Patentanspruch 1, dadurch gekennzeichnet, daß das vorreagierte Magnesiachromerz-Sintermaterial in der Masse in der Körnung von 0 bis 1 mm vorliegt.

### Claims

1. Refractory dry ramming mix for lining crucible induction furnaces consisting of $Al_2O_3$ in the form of fused corundum or sintered alumina as the principal material and having an additive containing MgO which on heating reacts with the $Al_2O_3$ principal material thereby forming a spinel, characterised in that the mix contains a pre-reacted magnesia-chromite sinter material as the spinel forming additive in an amount of from 5 to 50 wt.% and that the mix has a grain size of up to 5 mm and contains a fine fraction having a grain size of up to 0,1 mm in an amount of from 10 to 35 wt.%, this fine fraction consisting of the $Al_2O_3$ principal material or of the pre-reacted magnesia-chromite sinter material or of a mixture of these two materials.

2. Mix according to claim 1, characterised in that the prereacted magnesia-chromite sinter material in the mix has a grain size of up to 1 mm.

### Revendications

1. Pisé réfractaire damé à sec pour le revêtement de fours à creusets à induction, constitué d'une matière de base de type $Al_2O_3$ sous forme de corindon fondu ou d'alumine frittée, avec un additif contenant MgO qui réagit à chaud avec la matière de base de type $Al_2O_3$ en formant du spinelle, caractérisé en ce que le pisé contient comme additif formateur de spinelle une matière frittée à base de magnésie et de minerai de chrome ayant préalablement réagi, présente en une proportion de 5 à 50% en poids, ayant une granulométrie de 0 à 5 mm, et contient une proportion de fines, présentant une granulométrie de 0 à 0,1 mm, de 10 à 35% en poids, cette proportion de fines étant constituée en la matière de base de type $Al_2O_3$, en de la matière frittée à base de magnésie et de minerai de chrome ayant préalablement réagi, ou en un mélange de ces deux matières.

2. Pisé selon la revendication 1, caractérisé en ce que la matière frittée magnésie/minerai de chrome ayant préalablement réagi est présente dans le pisé selon la granulométrie de 0 à 1 mm.

0 005 482

$\frac{\Delta l}{l}$ [%]

3,5  3,0  2,5  2,0  1,5  1,0  0,5  0  -0,5

200  400  600  800  1000  1200  1400

T   [°C]

4  8  12  16  20  24

t   [h]

2   1   A   B